# EUROPEAN PATENT SPECIFICATION

(11) **EP 0 592 839 B1**
(45) Date of publication and mention of the grant of the patent: **03.07.1996**
(21) Application number: 93114992.6
(22) Date of filing: 17.09.1993
(51) Int. Cl.: F16C 33/41

(54) **Retention cage for the balls of rolling-contact bearings**
Kugelkäfig für die Kugeln eines Kugellagers
Cage à billes pour les billes des roulements à billes

(30) Priority: 15.10.1992 IT TO920248 U
(43) Date of publication of application: 20.04.1994
(73) Proprietor: SKF INDUSTRIE S.p.A., I-10123 Torino (IT)
(72) Inventor: Vignotto, Angelo, I-10134 Torino (IT); Vidale, Onorio, I-10100 Torino (IT)
(74) Representative: Lotti, Giorgio

(56) References cited:
- GB-A- 2 167 816
- US-A- 3 157 443
- US-A- 3 937 535
- US-A- 4 040 687
- US-A- 4 324 444

## Description

This invention relates to a retention cage for the balls contained in rolling-contact bearings.

Various types of retention cage for ball bearings are known, in which the balls are separated from each other by radial walls carried by a base ring.

GB-A-2 167 816 discloses a retention cage for bearing balls, consisting of:
- a circular base ring; and
- a crown of cavities extending from the base ring for receiving the bearing balls and being defined by a crown of radial couplers which have a substantially C-shaped cross section such that the cavities communicate with each other and which are arranged to retain the balls along a circumferential line passing through the centres of the balls.

It is an object of the present invention to provide a retention cage which enables the space between two adjacent balls to be reduced to a minimum in order to be able to increase the number of balls or to use larger diameter balls for the same bearing, so increasing the loading capacity of the bearing and hence its life.

A further object of the present invention is to provide a cage in which friction against the balls is reduced to a minimum.

A further object of the present invention is to provide a cage which allows improved lubricant grease circulation within the bearing.

These and further objects and advantages which will be more apparent from the ensuing description are attained according to the invention by a retention cage for bearing balls, of the type consisting of a circular base ring and a crown of cavities extending from the base ring for receiving the bearing balls and being defined by a crown of radial couplers which have a substantially C-shaped cross section such that the cavities communicate with each other and which are arranged to retain the balls along a circumferential line passing through the centres of the balls; characterized in that the cavities communicate with each other in the central region around the circumferential line going through the centres of the balls enabling the distance between two adjacent balls to be reduced to a minimum without them mutually interfering.

The structural and functional characteristics of a preferred but not-limiting embodiment of the cage according to the invention are described hereinafter with reference to the accompanying drawings, in which:
Figure 1 is a perspective view of the cage according to the present invention;
Figure 2 is a cross-section through the cage of Figure 1, to an enlarged scale;
Figure 3 is a partial front view of the cage in the direction of arrow A of Figure 2;
Figure 4 is a partial view of the cage from above in the direction of the arrow B of Figure 2.

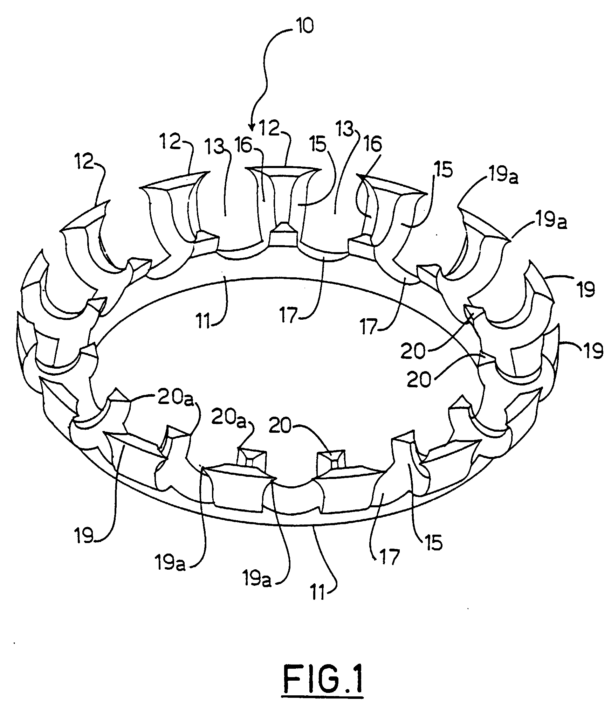

With reference initially to Figure 1, a cage according to the present invention is indicated overall by numeral 10. The cage 10 consists of a circular base ring 11, on one side of which there is formed in one piece therewith a crown of equally spaced radial couplers 12.

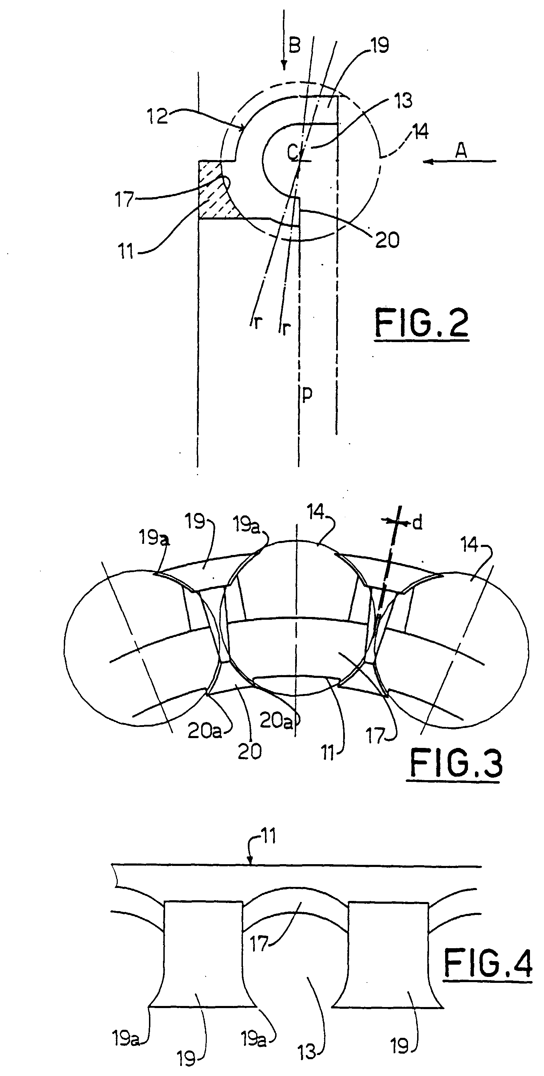

As shown in Figure 2, the couplers 12 have a substantially C-shaped axial section and are shaped to define, within the spaces between two adjacent couplers, a plurality of spherical seats or cavities 13 arranged to receive corresponding rolling balls 14 (Figure 3) which are arranged as a ring between the bearing races (not shown for simplicity) and are maintained at a constant distance apart by the cage 10.

Each spherical cavity 13 is substantially defined by three concave surfaces joined together, namely two surfaces 15 and 16 provided respectively on the opposing faces of two adjacent couplers 12 and a third concave surface 17 joining the first two together and provided on the base ring 11.

The couplers 12 are composed of two curved portions projecting from the ring 11, namely a longer portion 19 and a shorter portion 20, both having diverging ends 19a and 20a and cooperating with the adjacent couplers 12 to retain the balls 14.

As shown in Figure 2, to effectively retain the balls the portions 19 and 20 cover an arc extending through more than 180° in an axial plane. The configuration of the couplers 12 is such that the resultant of the actions and reactions transferred between each ball and the two adjacent couplers which retain it has a line of action r passing through the centre C of each ball, and substantially parallel or slightly inclined to the plane p in which the balls roll, this being perpendicular to the axis of rotation of the bearing.

The seats or cavities defined in this manner all intercommunicate in a circumferential direction; this enables the distance d (Figure 3 ) between two adjacent balls to be reduced to a minimum without them mutually interfering. As will be apparent, compared with the known art the space teen up by the radial walls mentioned in the introduction to the present description is eliminated. Consequently, as the available space is greater, the number and/or diameter of the balls can be increased to give greater loading capacity to the bearing and hence a longer life.

In addition, as the contact surfaces between the balls and the cage of the present invention are very small in area, the overall friction between the balls and cage is reduced.

Moreover, as the ball seats communicate with each other in the central spherical region of the balls, there is a net improvement in the distribution of lubricant grease over all the balls contained in the bearing.

## Claims

1. A retention cage (10) for bearing balls, of the type consisting of:
- a circular base ring (11); and
- a crown of cavities (13) extending from the base ring (11) for receiving the bearing balls (14) and being defined by a crown of radial couplers (12) which have a substantially C-shaped cross section such that the cavities (13) communicate with each other and which are arranged to retain the balls (14) along a circumferential line passing through the centres (c) of the balls;
characterized in that the cavities (13) communicate with each other in the central region around the circumferential line going through the centres (c) of the balls (14) enabling the distance (d) between two adjacent balls to be reduced to a minimum without them mutually interfering.

2. A cage as claimed in claim 1, characterized in that the couplers (12) are composed of two curved portions (19, 20) projecting from the base ring (11), namely a longer portion (19) and a shorter portion (20), both having their respective ends (19a, 20a) diverging in a circumferential direction.

3. A cage as claimed in any of the preceding claims, characterized in that each spherical cavity (13) is substantially defined by three concave surfaces (15, 16, 17) joined together, of which two surfaces (15, 16) are provided respectively on the opposing faces of two adjacent couplers (12), and the third surface (17) joining the first two together is provided on the base ring (11).

## Patentansprüche

1. Kugelkäfig (10) für die Kugeln eines Kugellagers, bestehend aus:
- einem kreisförmigen Basisring (11); und
- einem Kranz aus Vertiefungen (13), die sich von dem Basisring (11) erstrecken und die Kugeln (14) aufnehmen und durch einen Kranz von radialen Kopplern (12) definiert sind, die einen im wesentlichen C-förmigen Querschnitt aufweisen, so daß die Vertiefungen (13) miteinander in Verbindung stehen, und die so angeordnet sind, daß sie die Kugeln (14) entlang einer Umfangslinie, die durch die Mitte (C) der Kugeln verläuft, zurückhalten;
dadurch gekennzeichnet,
daß die Vertiefungen (13) in dem mittleren Bereich um die Umfangslinie, die durch die Mitte (C) der Kugeln (14) verläuft, in Verbindung stehen, so daß der Abstand (d) zwischen zwei angrenzenden Kugeln auf ein Minimum reduziert werden kann, ohne daß sie sich gegenseitig stören.

2. Käfig nach Anspruch 1,
dadurch gekennzeichnet,
daß die Koppler (12) aus zwei gekrümmten Abschnitten (19, 20) zusammengesetzt sind, die aus dem Basisring (11) herausragen, nämlich einem längeren Abschnitt (19) und einem kürzeren Abschnitt (20), deren Enden (19a, 20a) in Umfangsrichtung auseinanderlaufen.

3. Käfig nach einem der vorangegangenen Ansprüche,
dadurch gekennzeichnet,
daß jede kugelförmige Vertiefung (13) im wesentlichen durch drei konkave Oberflächen (15, 16, 17), die miteinander verbunden sind, definiert ist, von denen zwei Oberflächen (15, 16) jeweils auf den gegenüberliegenden Seiten von zwei angrenzenden Kopplern (12) vorgesehen sind, und die dritte Oberfläche (17), die die ersten beiden miteinander verbindet, auf dem Basisring (11) vorgesehen ist.

## Revendications

1. Cage de rétention (10) de billes d'un roulement à billes, du type consistant en:
- une bague de base circulaire (11) ; et
- une couronne de cavités (13) qui s'étendent à partir de la bague de base (11) pour recevoir les billes (14) du roulement, et qui est définie par une couronne d'accouplements radiaux dont la section transversale est configurée sensiblement en C d'une manière telle que les cavités (13) communiquent entre elles et sont agencées pour retenir les billes (14) le long d'une ligne circonférentielle qui passe par les centres (C) des billes;
caractérisée en ce que les cavités (13) communiquent entre elles dans la région centrale autour de la ligne circonférentielle qui passe par les centres (C) des billes (14), ce qui permet de réduire à un minimum la distance (d) entre deux billes adjacentes sans qu'elles interfèrent entre elles.

2. Cage selon la revendication 1, caractérisée en ce que les accouplements (12) sont composés de deux parties incurvées (19, 20) en saillie depuis la bague de base (11), à savoir une partie plus longue (19) et une partie plus courte (20), les extrémités respectives (19a, 20a) de l'une et de l'autre divergeant dans une direction circonférentielle.

3. Cage selon l'une quelconque des revendications précédentes, caractérisée en ce que chaque cavité sphérique (13) est définie sensiblement par trois surfaces concaves (15, 16, 17) réunies entre elles, parmi lesquelles deux surfaces (15, 16) sont agencées respectivement sur les faces opposées de deux accouplements adjacents (12), et la troisième surface (17) qui réunit entre elles les deux premières est agencée sur la bague de base (11).
